# EUROPEAN PATENT APPLICATION

(11) **EP 1 096 796 A2**
(43) Date of publication of application: **02.05.2001**
(21) Application number: 00118177.5
(22) Date of filing: 30.08.2000
(51) Int. Cl.: H04N 7/173

(54) **Cable system and the center system and subscriber terminal device for use in the cable system**

(30) Priority: 28.10.1999 JP 30756899
(71) Applicant: FUJITSU LIMITED, Kawasaki-shi, Kanagawa 211-8588 (JP)
(72) Inventor: Ishizaki, Masayuki, Fujitsu Limited, Kawasaki-shi, Kanagawa 211-8588 (JP)
(74) Representative: HOFFMANN - EITLE

(57) **Abstract**

In a cable system, a video data of a cable program is distributed from a center system to a subscriber terminal device via a cable network by using one of frequency-divided channels of broadcast programs, and two-way communication is carried out between the subscriber terminal device and the center system via the cable network. A management unit, provided in the center system, determines whether a request for two-way communication sent by the subscriber terminal device is received when the video data is distributed to the subscriber terminal device by using a corresponding one of the frequency-divided channels of broadcast programs. A multiplexing unit, provided in the center system, multiplexes the video data and two-way communication downstream data into a multiplex signal of the corresponding broadcast channel when the reception of the request is determined by the management unit, so that the center system transmits the multiplex signal to the subscriber terminal device via the cable network by using the corresponding broadcast channel. A data isolation unit, provided in the subscriber terminal device, isolates the downstream data and the video data from the multiplex signal of the corresponding broadcast channel, which is received at the subscriber terminal device.

## Description

### BACKGROUND OF THE INVENTION

### 1. Field of The Invention

The present invention relates to a cable (cable television, community antenna television CATV) system, and the center system and subscriber terminal devices for use in the cable system. More particularly, the present invention relates to the multiplex data transfer over a cable system which distributes an audio/video signal of a broadcast program from a center system to a subscriber terminal device via a cable network and carries out two-way data communications between the center system and the subscriber terminal device.

### 2. Description of the Related Art

Recently, the commercial inauguration of the communications satellite (CS) digital broadcasting, the plan for the broadcasting satellite (BS) digital broadcasting and the like are rapidly promoting the development of digital cable systems, digital broadcasting retransmission facilities, TV program selection and retransmission facilities, and TV program storage and retransmission facilities.

At the same time, the introduction of IP (Internet protocol)-based communication service of high-speed bidirectional data transfer using a combination of cable modem and personal computer is in progress being put into practical use. The IP-based communication service is aimed at providing interactive communications of high-speed data service between the center and the subscribers over the cable network.

In conventional analog cable service, the transmission of a commercial quality full-color, full-motion TV signal requires the bandwidth of 6 MHz. Recently, attention is given to the digital cable technique in which audio/video signals of broadcast programs are distributed from a center system to a subscriber terminal device via a cable network and two-way data communications between the center system and the subscriber terminal device are carried out.

In the communications satellite (CS) digital broadcasting, which started in Japan in October 1996, the compression of analog audio/video signal into a stream of digital moving frames utilizes the MPEG2 technique, and the data transmission and distribution of the digital audio/video signal utilizes the QPSK (quadrature phase shift keying) scheme. Similarly, in trial or experimental digital cable systems, the MPEG2 digital signal compression and the 64QAM (quadrature amplitude modulation) scheme are utilized for the transmission of multiplex signal on the cable using the bandwidth of 6 MHz.

In order to obtain the cable distribution service and the two-way communication service at the subscriber terminal devices, the subscriber terminal devices in the conventional cable equipment must be provided with digital set-top box (DSTB) functions to receive the cable distribution service, and with cable modem (CMDM) functions to receive the two-way communication service. The subscriber terminal devices in the conventional cable equipment have been complex and expensive in order to implement both the DSTB functions and the CMDM functions. It is difficult to provide simple, inexpensive subscriber terminal devices, in the conventional cable equipment, which supply both the cable distribution service and the two-way communication service to the subscribers.

### SUMMARY OF THE INVENTION

In order to overcome the above-described problems, preferred embodiments of the present invention provide an improved cable system that provides a simple, inexpensive subscriber terminal device with which the cable distribution service and the two-way communication service can be supplied to the subscriber.

Further, the preferred embodiments of the present invention provide an improved cable system that can provide the video program-related data to the subscriber terminal device at any time on demand by using a corresponding one of the frequency-divided broadcast channels for distributing the video data to the subscriber terminal device.

According to one preferred embodiment of the present invention, a cable system which distributes a video data of a cable program from a center system to a subscriber terminal device via a cable network by using one of frequency-divided channels of broadcast programs, and carries out two-way communication between the subscriber terminal device and the center system via the cable network, includes: a management unit which is provided in the center system and determines whether a request for two-way communication sent by the subscriber terminal device is received when the video data is distributed to the subscriber terminal device by using a corresponding one of the frequency-divided channels of broadcast programs; a multiplexing unit which is provided in the center system and multiplexes the video data and two-way communication downstream data into a multiplex signal of the corresponding broadcast channel when the reception of the request is determined by the management unit, so that the center system transmits the multiplex signal to the subscriber terminal device via the cable network by using the corresponding broadcast channel; and a data isolation unit which is provided in the subscriber terminal device and isolates the downstream data and the video data from the multiplex signal of the corresponding broadcast channel, which is received at the subscriber terminal device.

The cable system of the above preferred embodiment of the invention allows the user who is viewing the cable program to transmit a request for receiving the video program-related data to the center system and receive the program-related data from the center system while viewing the program, without a need for implementation of a complex, expensive subscriber terminal device as in the conventional cable equipment. The cable system of the above preferred embodiment is effective in providing a simple, inexpensive subscriber terminal device with which the cable distribution service and the two-way communication service can be supplied to the subscriber. It is possible for the cable system of the above preferred embodiment to provide the video program-related data to the subscriber terminal device at any time on demand by using a corresponding broadcast channel for distributing the video data to the subscriber terminal device.

According to one preferred embodiment of the present invention, a center system for use in a cable system in which a video data of a cable program is distributed to a subscriber terminal device via a cable network by using one of frequency-divided channels of broadcast programs, and two-way communication is carried out between the subscriber terminal device and the center system via the cable network, includes: a management unit which determines whether a request for two-way communication sent by the subscriber terminal device is received when the video data is distributed to the subscriber terminal device by using a corresponding one of the frequency-divided channels of broadcast programs; and a multiplexing unit which multiplexes the video data and two-way communication downstream data into a multiplex signal of the corresponding broadcast channel when the reception of the request is determined by the management unit, so that the center system transmits the multiplex signal to the subscriber terminal device via the cable network by using the corresponding broadcast channel.

The center system of the above preferred embodiment of the invention allows the user who is viewing the cable program to transmit a request for receiving the video program-related data to the center system and receive the program-related data from the center system while viewing the program, without a need for implementation of a complex, expensive subscriber terminal device as in the conventional cable equipment. The center system of the above preferred embodiment is effective in providing a simple, inexpensive subscriber terminal device with which the cable distribution service and the two-way communication service can be supplied to the subscriber.

According to one preferred embodiment of the present invention, a subscriber terminal device for use in a cable system in which a video data of a cable program is distributed from a center system to the subscriber terminal device via a cable network by using one of frequency-divided channels of broadcast programs, and two-way communication is carried out between the subscriber terminal device and the center system via the cable network, includes: a reception unit which receives a signal of a corresponding one of the frequency-divided channels of broadcast programs sent by the center system via the cable network; and a data isolation unit which isolates two-way communication downstream data and the distributed video data from a multiplex signal of the corresponding broadcast channel, which is received by the reception unit.

The subscriber terminal device of the above preferred embodiment of the invention allows the user who is viewing the cable program to transmit a request for receiving the video program-related data to the center system and receive the program-related data from the center system while viewing the program, without a need for implementation of a complex, expensive subscriber terminal device as in the conventional cable equipment. The subscriber terminal device of the above preferred embodiment is effective in providing a simple, inexpensive subscriber terminal device with which the cable distribution service and the two-way communication service can be supplied to the subscriber.

### BRIEF DESCRIPTION OF THE DRAWINGS

Other objects, features and advantages of the present invention will become apparent from the following detailed description when read in conjunction with the accompanying drawings.
FIG. 1 is a block diagram of a metropolitan-area digital cable system.
FIG. 2A and FIG. 2B are diagrams for explaining allocation of frequency-divided channels for the cable broadcast programs and the two-way communications.
FIG. 3 is a block diagram of a digital set top box.
FIG. 4 is a block diagram of a cable modem.
FIG. 5 is a block diagram of a digital set top box with a built-in cable modem.
FIG. 6A and FIG. 6B are diagrams for explaining a stream of audio/video packets with no EPG data inserted and a stream of audio/video packets with EPG data inserted.
FIG. 7 is a block diagram of a cable modem network.
FIG. 8 is a diagram for explaining a video-on-demand operational procedure.
FIG. 9 is a block diagram of one preferred embodiment of the center system of the invention.
FIG. 10 is a block diagram of functional elements of a management device in the center system of the present embodiment.
FIG. 11 is a block diagram of one preferred embodiment of the subscriber terminal device of the invention.
FIG. 12 is a flowchart for explaining a reception control process executed by the management device when receiving a request for the two-way communication sent by the subscriber.
FIG. 13 is a diagram for explaining a multiplexing of the video data and the video program-related data.
FIG. 14 is a diagram for explaining a data format of MPEG2 transport packet transmitted on an optical/coaxial cable.
FIG. 15A and FIG. 15B are diagrams for explaining a multiplexing of the distributed video data and the bidirectional-path downstream data.
FIG. 16 is a diagram for explaining a multiplexing of the distributed video data and the two-way communication downstream data.
FIG. 17 is a block diagram of a variation of the subscriber terminal device shown in FIG. 11.
FIG. 18 is a diagram for explaining a channel allocation for the multiplexing of the distributed video data and the two-way communication downstream data.
FIG. 19A, FIG. 19B, FIG. 19C and FIG. 19D are diagrams for explaining an example of transmission of the multiplex signal by the center system, for use of multimedia information transmission.

### DETAILED DESCRIPTION OF PREFERRED EMBODIMENTS

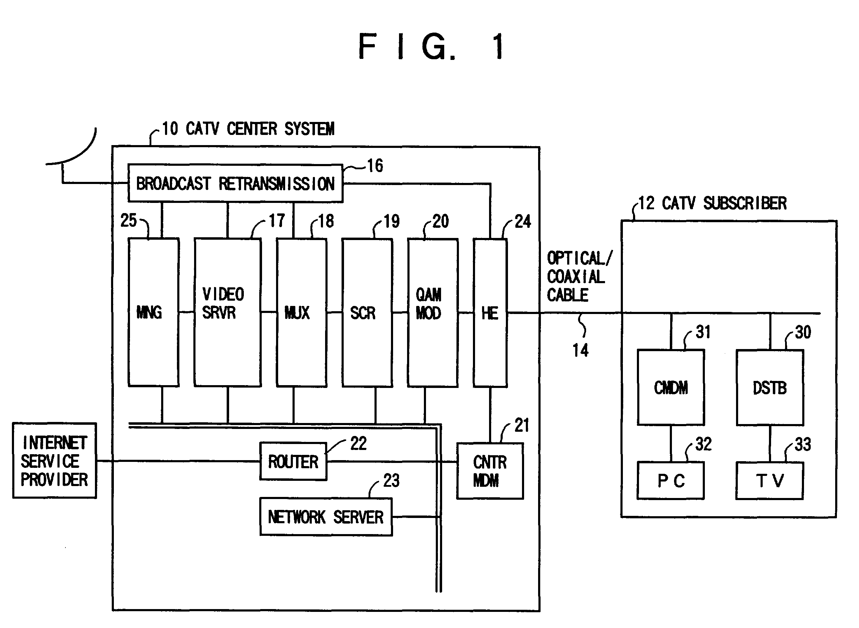

Before describing preferred embodiments of the present invention, a description will now be provided of the basic configuration of a digital cable system with reference to FIG. 1 through FIG. 8, in order to facilitate understanding of the basic concepts of the present invention.

FIG. 1 shows a metropolitan-area digital cable system. In the metropolitan-area digital cable system, the audio/video signals of broadcast programs are distributed from the center system to the subscriber terminal devices via the cable network and the two-way communications of high-speed data between the center system and the subscriber terminal devices are carried out. Further, in the metropolitan-area digital cable system, the HFC (hybrid fiber coax) system employing fiber optic and coaxial cable is utilized as the outside plant distribution cabling for the cable network. The optical fiber is deployed as the main distribution medium, terminating in a remote unit where optoelectric conversion takes place. At the remote unit, the signal then is passed onto coaxial cables which carry the data as the final media to the individual subscriber terminal devices. The distance of the coaxial cables as the final media can be less than about 1 kilometer. The use of the optical fiber as the main distribution medium can minimize the loss of data in the transmission and enable the transmitted data quality to be maintained at an acceptable level.

In the cable system shown in FIG. 1, a CATV center system 10 and a subscriber terminal device 12 are connected together by a hybrid optical/coaxial cable 14.

As shown in FIG. 1, the center system 10 generally comprises a broadcast retransmission device 16, a digital video server 17, a multiplexing device (MUX) 18, a scrambling device (SCR) 19, a QAM (quadrature amplitude modulation) modulator 20, a center modem 21, a router 22, a network server 23, a head end (HE) 24, and a management device 25.

The broadcast retransmission device 16 retransmits a digital satellite or ground-based broadcasting signal, which is received at an antenna of the center system 10, to the cable in order to provide audio/video distribution service.

The video server 17 stores large amounts of video data for providing a video-on-demand (VOD) service that allows many users to request the same videos at the same time or any time.

The multiplexing device (MUX) 18 provides multiplexing of video data of several user-selected cable programs into a multiplex signal of a corresponding one of the frequency-divided cable channels being carried by the cable.

The scrambling device (SCR) 19 converts the multiplex signal, supplied by the multiplexing device 18, into the scrambled data.

The QAM modulator (QAM MOD) 20 provides QAM modulation of the scrambled video data for the carrier signal that is delivered on the cable.

The center modem 21 provides the two-way data communications between the center system 10 and the individual subscriber terminal devices through the cable network. The router 22 is connected to the external equipment of the Internet service provider, and the network server 23 provides management of the two-way communication service using the router 22.

The head end (HE) 24 provides mixing and distribution of the cable broadcast signal and the two-way communication signals. The management device 25 controls the entire center system 10.

As shown in FIG. 1, the subscriber terminal device 12 generally comprises a digital set-top box (DSTB) 30, a cable modem (CMDM) 31, a personal computer (PC) 32, and a television (TV) 33.

In the subscriber terminal device 12 of FIG. 1, the DSTB 30 connects the incoming cable to the TV 33. The DSTB 30 primarily receives the distributed audio/video data from the cable and allows the user to watch the cable program on the TV 33.

Further, the combination of the CMDM 31 and the PC 32 used in the subscriber terminal device 12 allows the user to obtain various interactive IP-based service in the high-speed data access environment, which are different from those of a system based on a public switched telephone network. The interactive IP-based service that can be provided in conjunction with the CMDM 31 and the PC 32 include: (1) the video-on-demand (VOD) service; (2) the karaoke downloading (3) the computer game downloading; (4) the on-line shipping; (5) the PC communications and the Internet; (6) the video telephony and videoconference; (7) the software shopping; and (8) the remote education.

With the digital cable system of FIG. 1, including the center system 10 and the subscriber terminal device 12, the users can obtain the one-way digital cable service, and the interactive IP-based service, including the VOD service, the on-line shopping, the computer game and karaoke downloading, etc.

It should be noted that, in a conventional digital cable system, the cable channel used to distribute the broadcast programs and the two-way communication downstream channel used to transmit the IP-based data for the interactive service are separated from each other.

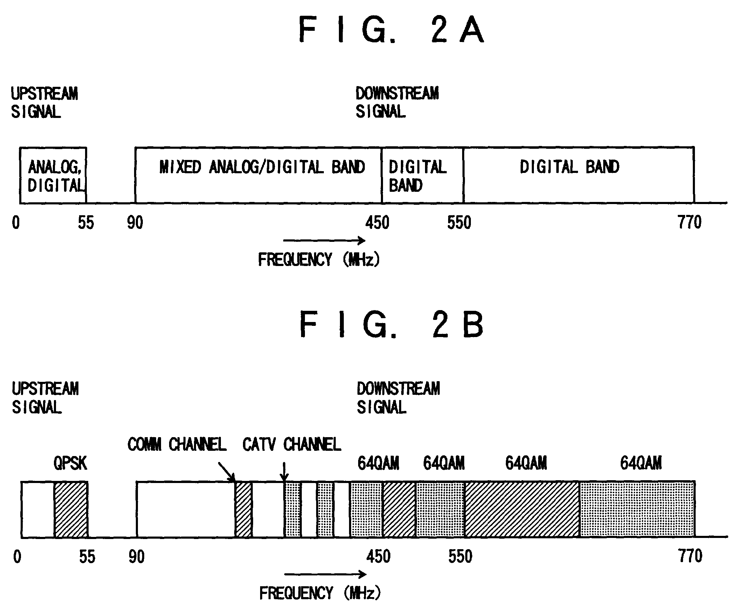

FIG. 2A and FIG. 2B show allocation of frequency-divided channels for the cable broadcast programs and the two-way communications. FIG. 2A shows the analog and digital channel allocation. FIG. 2B shows the broadcast and communication channel allocation.

As described above, in the subscriber terminal device 12, the DSTB 30 connects the cable to the TV 33 in order to receive the one-way digital cable service, and the CMDM 31 connects the cable to the PC 32 in order to receive the interactive IP-based service. The user on the subscriber terminal device 12 can receive both the cable service and the IP-based service. As shown in FIG. 2B, in a conventional digital cable system, the cable channel used to distribute the broadcast programs and the two-way communication downstream channel used to transmit the IP-based data for the interactive service are separated from each other.

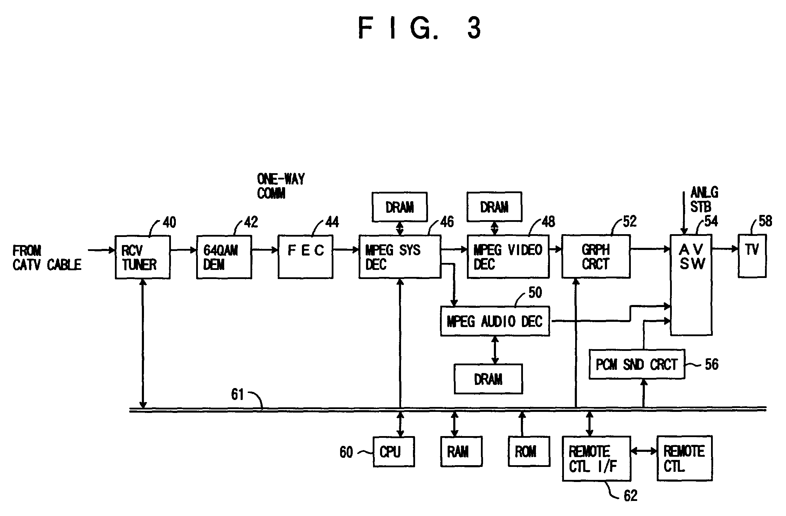

FIG. 3 shows a configuration of a digital set top box (DSTB).

In the DSTB of FIG. 3, a receiving tuner 40 receives the multiplex data from the coaxial cable, and supplies the received data to a 64QAM demodulator (64QAM DEM) 42. The demodulator 42 extracts digital information from the received data, and supplies the digital data to a forward error correcting device (FEC) 44. After the digital data is subjected to error correction processing, the digital data is supplied from the device 44 to an MPEG system decoder (MPEG SYS DEC) 46.

The MPEG system decoder 46 transforms the data into the video components and the audio components. The video components are supplied from the system decoder 46 to an MPEG video decoder (MPEG VIDEO DEC) 48. The audio components are supplied from the system decoder 46 to an MPEG audio decoder (MPEF AUDIO DEC) 50.

The video decoder 48 produces video information from the received video components, and supplies it to an audio/video switch (AV SW) 54 via a graphics circuit (GRPH CRCT) 52. The graphics circuit 52 generates character/graphic display information in accordance with instructions sent by a CPU 60. The audio decoder 50 produces audio information from the received audio components and supplies it to the AW switch 54.

In addition, an audio/video signal is supplied from an external analog set-top box (ANLG STM) to the AV switch 54. Further, sound information is supplied from a PCM sound circuit 56 to the AV switch 54. These signals are subjected to the switching by the AV switch 54, and the resulting signals are then supplied from the AV switch 54 to a television (TV) 58.

In the DSTB of FIG. 3, the CPU 60 controls the entire DSTB 30. The receiving tuner 40, the MPEG system decoder 46, the PCM sound circuit 56, a remote controller interface (REMOTE CTL I/F) 62, a RAM (random access memory), a ROM (read-only memory), and the CPU 60 are interconnected by a bus 61.

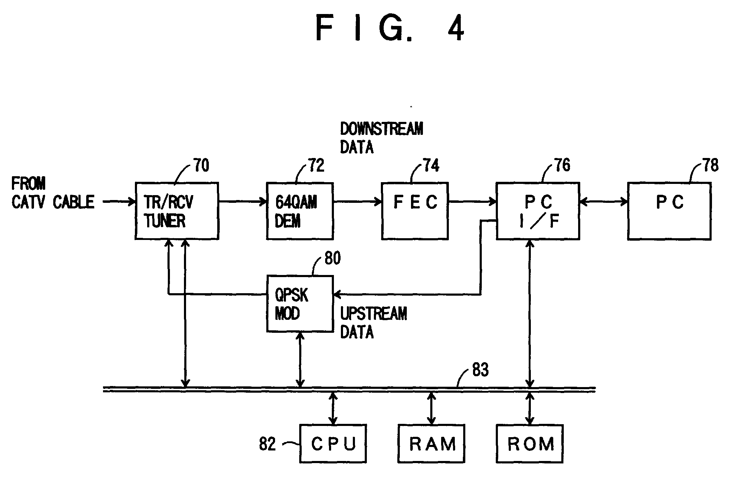

FIG. 4 shows a configuration of a cable modem (CMDM).

In the CMDM of FIG. 4, a transmitting/receiving tuner (TR/RCV TUNER) 70 receives the multiplex data from the coaxial cable, and supplies the received data to a 64QAM demodulator (64QAM DEM) 72. The demodulator 72 extracts digital information from the received data, and supplies the digital data to a forward error correcting device (FEC) 74. After the digital data is subjected to error correction processing, the digital data is supplied from the device 74 to a personal computer (PC) 78 via a personal-computer interface (PC I/F) 76.

On the other hand, the PC 78 transmits data to a QPSK modulator (QPSK MOD) 80 via the PC I/F 76. The modulator 80 encodes the received data onto an analog carrier signal by varying the phase of the carrier signal by the QPSK. The modulated signal is supplied from the modulator to the tuner 70 so that the signal is delivered on the cable to the center system (not shown).

In the CMDM of FIG. 4, a central processing unit (CPU) 82 controls the entire CDMD system. The CPU 82, the tuner 70, the PC I/F 76, the modulator 80, a random access memory (RAM) and a read-only memory (ROM) are interconnected by a bus 83.

In the CMDM of FIG. 4, the 64QAM scheme, which meets the technical requirements provided by the Telecommunications Technology Council organized by the consultative body of the Ministry of Posts and Telecommunications in Japan, is used for the demodulation of the downstream data transmitted on the cable. The 64QAM or QPSK scheme is used for the modulation of the upstream data transmitted on the cable.

Further, the digital cable system as shown in FIG. 1 employs the data format of MPEG2 transport packet for the transmission of the cable broadcast programs. For the two-way communication service, the digital cable system as shown in FIG. 1 uses the Internet protocol (IP) as the network layer, the IEEE802.2 (LLC) or IEEE802.3 (MAC) protocol as the media access control layer, and the 10Base-T or 100Base-T protocol as the physical layer. The IP-based data is bidirectionally transmitted through the respective layers in a transparent manner.

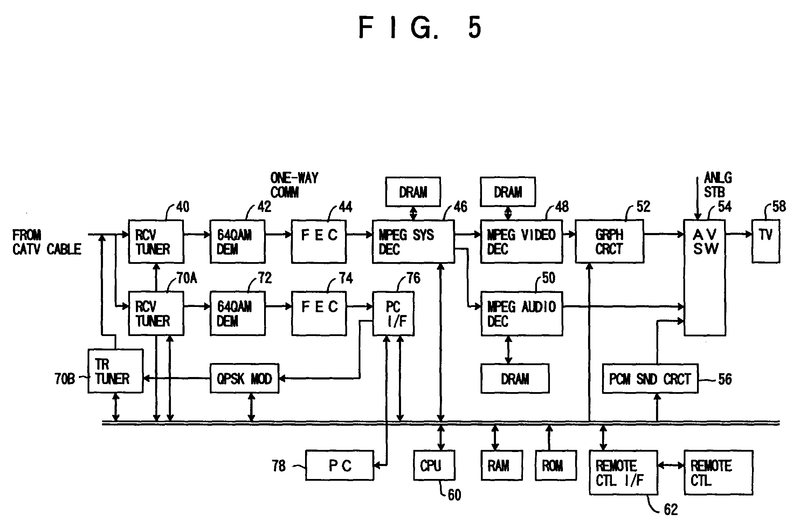

Alternatively, a digital set-top box (DSTB) with a built-in cable modem (CMDM) may be provided in the digital cable system of FIG. 1 in place of the separate DSTB and CMDM devices. FIG. 5 shows a configuration of such DSTB with the built-in CMDM.

In FIG. 5, the elements which are essentially the same as corresponding elements in FIG. 3 or FIG. 4 are designated by the same reference numerals, and a description thereof will be omitted.

In the DSTB with the built-in CDMD shown in FIG. 5, a receiving tuner (RCV TUNER) 70A corresponds to the receiving tuner part of the TR/RCV tuner 70 shown in FIG. 4, and a transmitting tuner (TR TUNER) 70B corresponds to the transmitting tuner part of the TR/RCV tuner 70 shown in FIG. 4. The DSTB of FIG. 5 is configured to include the combined functions of the functions provided by the DSTB of FIG. 3 and the functions provided by the CMDM of FIG. 4. As shown in FIG. 5, the DSTB with the built-in CMDM connects the cable to the TV 58 and the PC 78.

Similar to the CS digital broadcasting, the digital cable system may transmit electric program guide (EPG) data, which are inserted into the cable broadcast programs as part of the MPEG2 transport stream (TS). The EPG data includes information indicating the provided service name, the service provider name, the current program title, the following program title, etc.

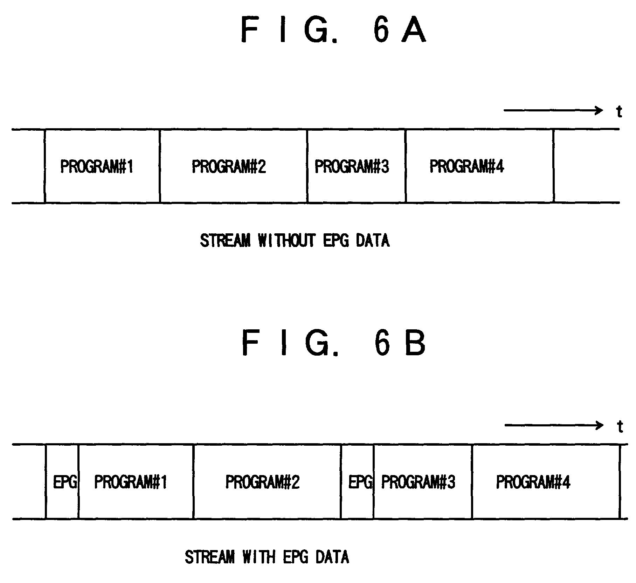

FIG. 6A and FIG. 6B respectively show a stream of audio/video packets of broadcast programs without EPG data and a stream of audio/video packets of broadcast programs with EPG data inserted therein.

The bit rate of the EPG data is usually in a range of 3 Mbps to 5 Mbps, which corresponds to 1/10 to 1/6 of the bit rate of 31.644 Mbps of the whole data of the MPED2-TS.

Generally, the bit rate of the transmission data per channel depends on the modulation method. In the above example, the 64QAM scheme is considered. The number of the broadcast programs that can be simultaneously delivered on the cable with the bandwidth of 6 MHz depends on how many moving picture frames per unit time can be compressed into the multiplex signal. The quantity of information delivered on the cable varies depending on the individual broadcast programs. The bit rates of the coded data that are dealt with in the MPEG2 scheme are up to 15 Mbps. The digital cable system usually employs the bit rate in the range of 5 to 6 Mbps for sports programs, the bit rate in the range of 3 to 5 Mbps for movie programs, and the bit rate of 3 Mbps for animation programs.

Alternatively, the bit rate may be controlled by varying the rate of compression of the moving picture frames of the data encoder. However, the above-mentioned bit rate allocation for the digital cable system is determined so as to meet the normal quality of the produced TV pictures. In the case of the digital data transmission using the 64QAM technique, the multiplex data including five broadcast programs and EPG data can be simultaneously delivered on the cable with the bandwidth of 6 MHz corresponding to one channel for the conventional analog data transmission.

When the user wants to select a desired one of the multiple cable programs at the subscriber terminal device, the user views the program titles of the EPG data on the TV and performs the program selection operation by using the remote controller of the DSTB. However, in the conventional cable equipment, the user cannot temporarily view the EPG data while viewing the cable program on the TV. After the cable program ends, the user can view the EPG data on the TV.

It is difficult that, in the conventional cable equipment, the user who is viewing the cable program on the TV transmits a request for receiving the video program-related data to the center system and receives the program-related data from the center system while viewing the program.

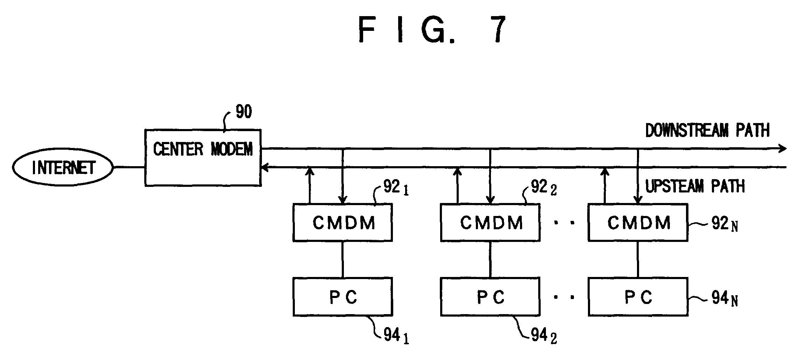

FIG. 7 shows a configuration of a cable modem network.

As shown in FIG. 7, a center modem 90 at the location of the center system is connected to a plurality of cable modems (CMDMs) 92₁ through 92_{N} of the multiple subscribers via downstream and upstream communication paths. A plurality of personal computers (PCs) 94₁ through 94_{N} are respectively attached to the CMDMs 92₁ through 92_{N}. For the two-way communication service provided by the cable modem network, the speed of the data transmission on the downstream path is 31.644 Mbps, and the speed of the data transmission on the upstream path is in a range of some hundred Kbps to some Mbps. Each of the plurality of the cable modems 92₁ through 92_{N} can have access to each of the downstream and upstream communication paths.

The assignment of the bandwidth of the data transmission on the downstream path is determined by a combination of the FDM (frequency division multiplexing) slots and the TDM (time division multiplexing) slots. The CDMD 92 of each subscriber uses the assigned one of the two-way communication downstream channels for receiving the data from the center modem 90.

Similarly, the assignment of the bandwidth of the data transmission on the upstream path is determined by a combination of the FDMA (frequency division multiple access) slots and the TDMA (time division multiple access) slots. The CDMD 92 of each subscriber uses the assigned one of the two-way communication upstream channels for transmitting the data to the center modem 90 after the time selection of the upstream transmission channel is received by the multiple access control.

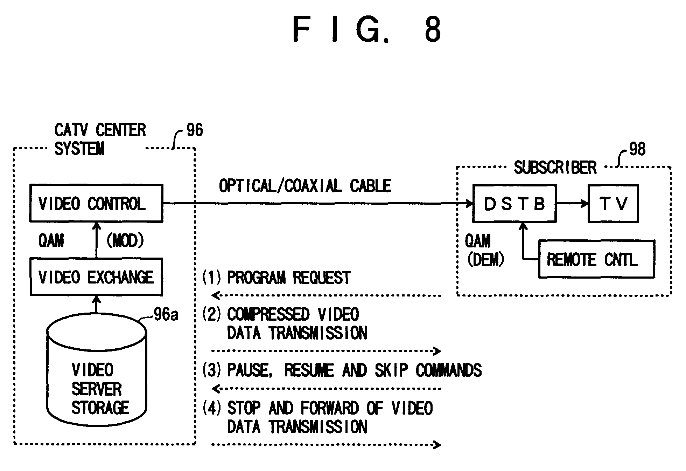

FIG. 8 shows a video-on-demand (VOD) operational procedure. The VOD service is achieved by combining the cable distribution service and the two-way communication service described above.

In the VOD operational procedure of FIG. 8, (1) the subscriber at a subscriber terminal device 98 transmits a request for a desired video program to a CATV center system 96. (2) The center system 96 in response extracts video data of the requested program from the storage of a video server 96a, and transmits the compressed video data to the subscriber terminal device 98 via the cable. (3) The subscriber transmits any of pause, resume and skip commands to the center system 96, if necessary. (4) The center system 96 in response stops or forwards the video data transmission with respect to the subscriber terminal device 98.

As the number of the cable downstream channels delivered on the cable is limited, the cable channels or the cable programs that can be simultaneously transmitted by the center system 96 to the subscribers is restricted. In addition, the quantity of the video data that can be simultaneously supplied by the video server 96a in response to the user requests is also restricted by the amount of storage available to the video server 96a.

By taking the above-mentioned restrictions of the VOD service into consideration, there is also a Near Video On Demand (NVOD) service, which provides the users with the desired video programs on a rotating schedule, or at nearly any time. Further, an extended EPG concept with which the video program-related data, like the EPG, for specific cable programs are stored in the video server of the center system and supplied to the users on demand will be developed in the future. However, it is difficult to simultaneously provide the EPG distribution service and the cable distribution service to the users by using the conventional cable equipment.

The conventional cable equipment to provide the VOD service has been complex and expensive. The VOD service requires a high-end video server with a mass storage in the center system. Further, the subscriber terminal devices in the conventional cable equipment have been complex and expensive in order to implement the DSTB functions to receive the cable distribution service and the CMDM functions to receive the two-way communication service.

In order to eliminate the above problems, the cable system of the present invention is configured to provide a simple, inexpensive subscriber terminal device with which the cable distribution service and the two-way communication service are independently supplied to the subscriber. Further, the cable system of the present invention is configured to provide the video program-related data to the subscriber at any time on demand by using a specified one of the cable channels.

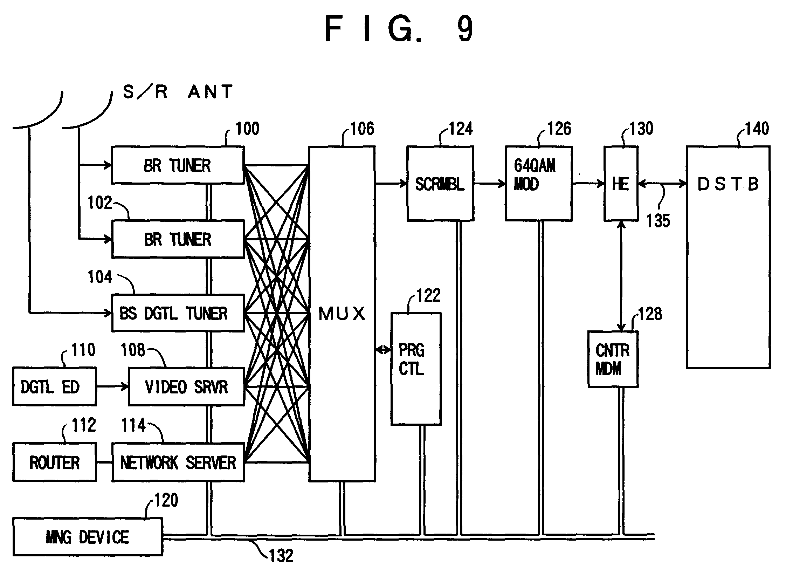

A description will now be provided of the preferred embodiments of the present invention with reference to FIG. 9 through FIG. 19D.

FIG. 9 shows a configuration of one preferred embodiment of the center system of the invention.

As shown in FIG. 9, in the center system of the present embodiment, a broadcast receiving tuner (BR TUNER) 100, a broadcast receiving tuner (BR TUNER) 102 and a broadcasting-satellite digital tuner (BS DGTL TUNER) 104 receive digital satellite or ground-based broadcast signals from satellite receiving antennas (S/R ANT), and supply the received signals to a multiplexing device (MUX) 106 for retransmission of the broadcast signals to the cable. A video server 108 stores the broadcast signals, sent from the tuners 100, 102 and 104, or the self-originated broadcast signals. A digital editor device (DGTL ED) 110 creates the video modification data. The video server 108 further stores the video modification data supplied by the digital editor device 110. The video data or the video modification data, read from the storage of the video server 108, are supplied to the multiplexing device 106.

In the center system of FIG. 9, a router 112 is connected to external equipment (not shown), such as the Internet service provider. A network server 114 provides management of the two-way communication service using the router 112. A management device 120 provides various management and control functions of the entire cable system, including the subscriber managing function, the cable program managing function, the program related data managing function, the subscriber charging managing function, etc.

The multiplexing device (MUX) 106 provides multiplexing of video data of several user-selected cable programs into a multiplex signal of a corresponding one of the frequency-divided cable channels that is carried by the cable. When a user's request for the two-way communication (or a request for receiving the video program-related data) is received from a particular subscriber terminal device, the management device 120 determines the reception of the user's request from the particular subscriber terminal device. The management device 120 causes the MUX 106 to provide multiplexing of the video data of the cable program (which is supplied to the particular subscriber terminal device) and the program-related data into a multiplex signal of a corresponding one of the cable channels for distributing the cable video data. Then, the multiplex signal is transmitted to the subscriber terminal device via the cable by using the corresponding cable channel.

A program control device (PRG CTL) 122 supplies program control data for the cable distribution to the MUX 106. The MUX 106 provides the multiplexing of the program control data supplied by the program control device 122.

A scrambling device (SCR) 124 converts the multiplex signal, supplied by the multiplexing device 106, into scrambled video data. The scrambled video data will be transmitted to a digital set top box (DSTB) 140 in the subscriber terminal device via an optical/coaxial cable 135, and the DSTB 140 descrambles the received data into the original video data.

A QAM modulator (64QAM MOD) 126 provides 64QAM modulation of the scrambled video data for the carrier signal, which is transmitted on the cable 135. The modulator 126 has an error correcting function that serves to eliminate the error of the transmission data.

A center modem (CNTR MDM) 128 provides the two-way data communications between the center system and the individual subscriber terminal devices through the cable network. A head end (HE) 130 connects the center modem 128 and the DSTB 140 through the cable 135. Further, the head 130 connects the modulator 126 and the DSTB 140 through the cable 135. The head end 130 provides mixing and distribution of the cable broadcast signals and the two-way communication signals. The two-way data communications are carried out by the center modem 128 in conjunction with the cable modem, which is provided in the DSTB 140 of each subscriber terminal device.

In the center system of FIG. 9, the tuners 100, 102 and 104, the video server 108, the network server 114, the management device 120, the multiplexing device 106, the program control device 122, the scrambling device 124, the modulator 126, and the center modem 128 are interconnected by a center local area network 132.

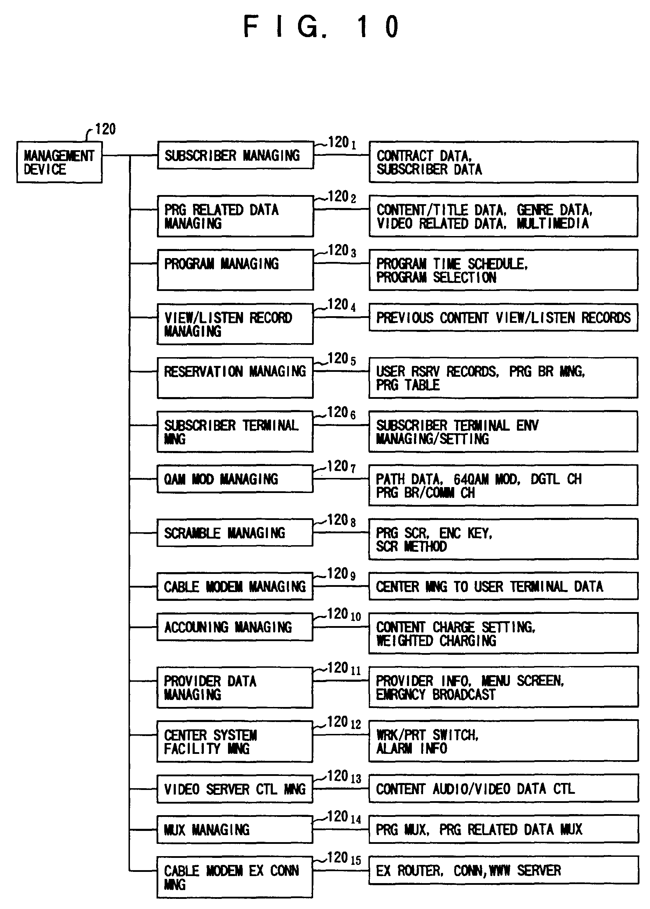

FIG. 10 shows functional elements of the management device 120 in the center system of the present embodiment.

In the management device 120 of FIG. 10, a subscriber managing unit 120₁ provides management of the contract data and the subscriber data in the cable system of the present embodiment. A program related data managing unit 120₂ provides management of the program related data, including content/title data, genre data, video related data and multimedia data, in the cable system of the present embodiment. A program managing unit 120₃ provides management of the program time schedule and the program selection in the cable system of the present embodiment. A view/listen record managing unit 120₄ provides management of the previous content view/listen records in the cable system of the present embodiment.

In the management device 120 of FIG. 10, a reservation managing unit 120₅ provides management of the user reservation records and the program distribution records by using a program table. A subscriber terminal managing unit 120₆ provides management and setting of the subscriber terminal environment in the cable system of the present embodiment. A QAM modulation managing unit 120₇ provides management of the path data, the 64QAM modulation, the digital channels and the program broadcast/two-way communication channels in the cable system of the present embodiment. A scramble managing unit 120₈ provides management of the program scramble, encryption key and scrambling methods in the cable system of the present embodiment. A cable modem managing unit 120₉ provides management of information between the center management device and the subscriber terminal devices in the cable system of the present embodiment. An accounting managing unit 120₁₀ provides management of the content charge setting and the weighted charging.

In the management device 120 of FIG. 10, a provider data managing unit 120₁₁ provides management of the provider information, the menu screen information and the emergency broadcasting information. A center system facility managing unit 120₁₂ provides management of the working/protection switching and the alarm information. A video server control managing unit 120₁₃ provides control of the content audio/video data. A multiplexing device managing unit 120₁₄ provides management of the program data multiplexing and the program related data multiplexing. A cable modem external connection managing unit 120₁₅ provides management of the external router connection and the Web server connection.

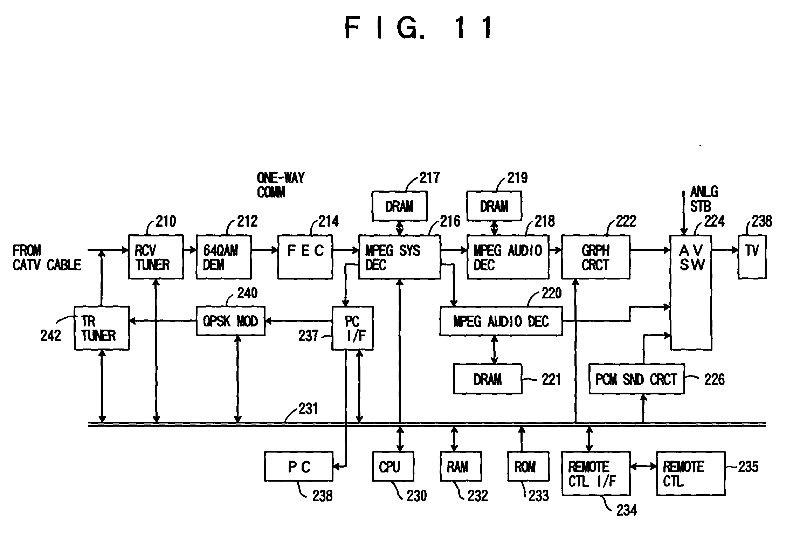

FIG. 11 is a block diagram of one preferred embodiment of the subscriber terminal device of the invention.

The subscriber terminal device of the present embodiment is constituted by a digital set-top box (DSTB) with a built-in cable modem (CMDM). The subscriber terminal device of the present embodiment corresponds to the DSTB 140 of FIG. 9, and, hereinafter, will be referred to the DSTB.

In the DSTB of FIG. 11, a receiving tuner (RCV TUNER) 210 receives the multiplex data from the coaxial cable by tuning it to a corresponding one of the frequency-divided channels of broadcast programs in the range between 90 MHz and 770 MHz, and supplies the received data to a 64QAM demodulator (64QAM DEM) 212.

The demodulator 212 extracts digital information from the received data, and supplies the digital data to a forward error correcting device (FEC) 214. After the digital data is subjected to error correction processing, the digital data is supplied from the device 214 to an MPEG system decoder (MPEG SYS DEC) 216.

The MPEG system decoder 216 transforms the multiplex data into decoded information, and temporarily stores such data into a DRAM 217. Specifically, the decoder 216 detects which of video, audio and data is carried by the MPEG2 transport packet received from the cable, by checking a packet identifier (PID) in a packet header of the received MPEG2 transport packet. The decoded video components, the decoded audio components or other decoded components are temporarily stored in the RAM 217.

The video components are supplied from the system decoder 216 to an MPEG video decoder (MPEG VIDEO DEC) 218. The audio components are supplied from the system decoder 216 to an MPEG audio decoder (MPEF AUDIO DEC) 220. The other decoded components are supplied from the system decoder 216 to a personal computer (PC) 238 via a personal-computer interface (PC I/F) 237.

The video decoder 218 produces video information from the received video components by using a DRAM 219, and supplies it to an audio/video switch (AV SW) 224 via a graphics circuit (GRPH CRCT) 222. The graphics circuit 222 generates character/graphic display information in accordance with instructions sent by a CPU 230. The audio decoder 220 produces audio information from the received audio components by using a DRAM 221, and supplies it to the AW switch 224.

In addition, an audio/video signal is supplied from an external analog set-top box (ANLG STM) to the AV switch 224. Further, sound information is supplied from a PCM sound circuit 226 to the AV switch 224. These signals are subjected to the switching by the AV switch 224, and the resulting signals are then supplied from the AV switch 224 to a television (TV) 238.

In the DSTB of FIG. 11, the CPU 230 controls the entire DSTB system. The receiving tuner 210, the MPEG system decoder 216, the graphics circuit 222, the PCM sound circuit 226, the PC interface 237, a QPSK modulator 240, a transmitting tuner (TR TUNER) 242, a remote controller interface (REMOTE CTL I/F) 234, a RAM 232, a ROM 233, and the CPU 230 are interconnected by a bus 231.

In the DSTB of FIG. 11, the PC 238 transmits data to the QPSK modulator (QPSK MOD) 240 via the PC I/F 237. The modulator 240 encodes the received data onto an analog carrier signal by varying the phase of the carrier signal by the QPSK. The modulated signal is supplied from the modulator 240 to the tuner 242 so that the signal is delivered on the cable to the center system (not shown).

In the DSTB of FIG. 11, the 64QAM scheme, which meets the technical requirements provided by the Telecommunications Technology Council organized by the consultative body of the Ministry of Posts and Telecommunications in Japan, is used for the demodulation of the downstream data transmitted on the cable. The 64QAM or QPSK scheme is used for the modulation of the upstream data transmitted on the cable.

Further, the digital cable system as shown in FIG. 9 employs the data format of MPEG2 transport packet for the transmission of the cable broadcast programs. For the two-way communication service, the digital cable system as shown in FIG. 9 uses the Internet protocol (IP) as the network layer, the IEEE802.2 (LLC) or IEEE802.3 (MAC) protocol as the media access control layer, and the 10Base-T or 100Base-T protocol as the physical layer. The IP-based data is bidirectionally transmitted through the respective layers in a transparent manner.

In the digital cable system of the present embodiment, the subscriber terminal device (or the DSTB 140) is configured to include a notification unit, which transmits, when sending a request for two-way communication to the center system via the cable 135, a notification of the indication as to whether the cable program is currently viewed on the TV for the DSTB 140 and a notification of the corresponding broadcast channel acceptable to the receiving tuner of the DSTB 140, to the center system.

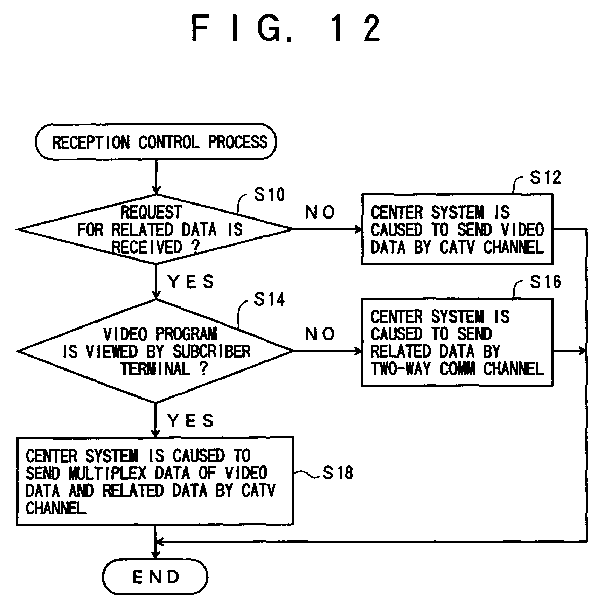

FIG. 12 shows a reception control process executed by the management device 120 of the center system of FIG. 9 when receiving a request for the two-way communication sent by the subscriber.

As shown in FIG. 12, at a start of the reception control process, the management device 120 determines whether a request for the video program-related data is received from the subscriber terminal device (S10). When the result at the step S10 is negative, the management device 120 causes the center system to transmit only the video data to the subscriber terminal device (the DSTB 140) via the cable 135 by using a corresponding one of the frequency-divided channels of broadcast programs (S12). After the step S12 is performed, the reception control process is terminated.

When the result at the step S10 is affirmative, the management device 120 determines whether the video program is currently viewed by the subscriber terminal device (S14). When the result at the step S14 is negative, the management device 120 causes the center system to transmit only the video program-related data to the subscriber terminal device (the DSTB 140) via the cable 315 by using the two-way communication downstream channel (S16). After the step S16 is performed, the reception control process is terminated.

On the other hand, when the result at the step S14 is affirmative, the management device 120 causes the center system to transmit the multiplex data of the video data and the video program-related data to the subscriber terminal device (the DSTB 140) via the cable 135 by using the corresponding one of the frequency-divided channels of broadcast programs at the modulator 126 (S18). In the step S18, the management device 120 causes the multiplexing device 106 to extract the video program-related data from the video server 108 in accordance with the user's request before the multiplexing of the video data and the video program-related data. After the step S18 is performed, the reception control process is terminated.

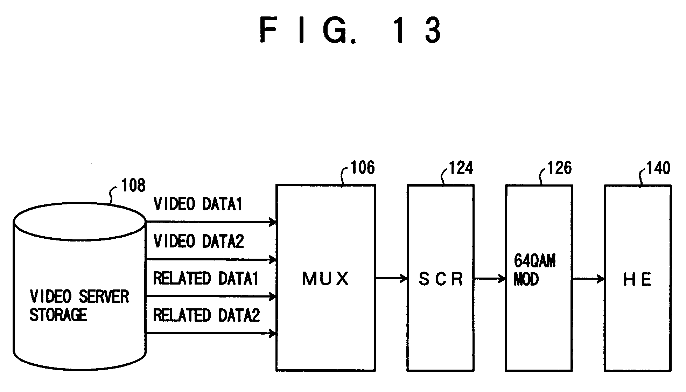

FIG. 13 shows a multiplexing of the video data and the video program-related data, which is performed by the center system of FIG. 9.

As shown in FIG. 13, when the user's request for the video program-related data is received, the management device 120 causes the multiplexing device 106 to extract the video data, including video data1 and video data2, and the video program-related data, including related data1 and related data2, from the storage of the video server 108. The multiplexing device 106 provides multiplexing of the video data and the video program-related data into a multiplex signal. The modulator 126 provides the 64QAM modulation of the scrambled multiplex signal by using the corresponding broadcast channel.

Accordingly, the subscriber terminal device of FIG. 11 uses only a single receiving tuner 210 for receiving the cable distribution service and the two-way communication service, and does not require the two receiving tuners as in the subscriber terminal device of FIG. 5. The subscriber terminal device of FIG. 11 allows the user who is viewing the cable program to transmit a request for receiving the video program-related data to the center system and receive the program-related data from the center system while viewing the program, without a need for implementation of a complex, expensive subscriber terminal device as in the conventional cable equipment. The subscriber terminal device of the present embodiment is effective in providing a simple, inexpensive subscriber terminal device with which the cable distribution service and the two-way communication service can be supplied to the subscriber.

Further, in the above-described embodiment of FIG. 12, when a request for two-way communication sent by the subscriber terminal device is received at the center system but the video data is not distributed to the subscriber terminal device, the management device 120 causes the center system to transmit the two-way communication downstream data to the subscriber terminal device by using the two-way communication downstream channel.

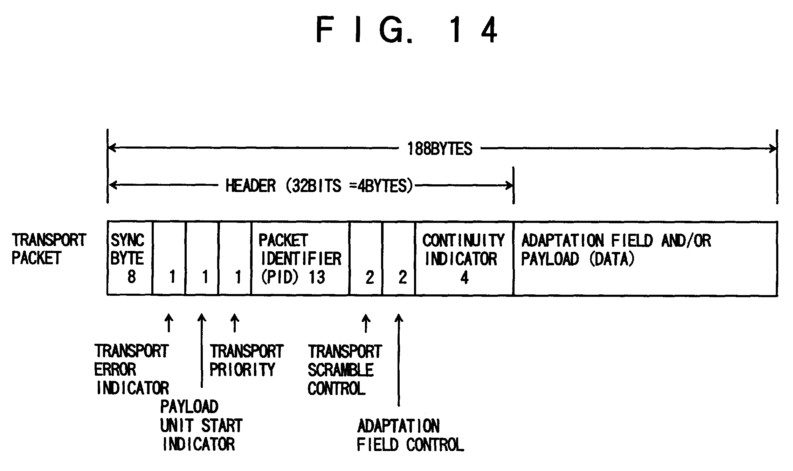

FIG. 14 shows a data format of the MPEG2 transport packet transmitted on the optical/coaxial cable 135.

As shown in FIG. 14, the MPEG2 transport packet includes a 4-byte packet header (32 bits). The header of the transport packet includes various kinds of control information, which consist of a sync byte (8 bits), a transport error indicator (1 bit), a payload unit start indicator (1 bit), a transport priority (1 bit), a packet identifier (which will be called PID) (13 bits), a transport scramble control (2 bits), an adaptation field control (2 bits), and a continuity indicator (4 bits). The sync byte of the header identifies the position of a start of that transport packet. The transport scramble control of the header indicates whether the payload data is scrambled or not. The adaptation field control of the header indicates how the main portion of the transport packet is arranged, that is, indicating one of the adaptation field or the payload data, or both, are arranged in the main portion of the transport packet.

As shown in FIG. 14, the MPEG2 transport packet includes the remaining 184-byte main portion, which may contain an adaptation field and/or a payload data. The 13-bit PID of the packet header provides identification of any of video, audio or data that is provided in the main portion of the transport packet. In the present embodiment, the center modem 128 and head end 130 are configured to provide the interface between the center system of FIG. 9 and the DSTB 140 of each subscriber terminal device through the cable 135. The MPEG2 transport packet, which is transmitted on the cable 135 from the center system to the DSTB 140, carries the multiplex data of the cable video data and the two-way communication downstream data. In other words, the cable system of the present embodiment is configured to provide the interface for the delivery of high-speed IP-based data services over MPEG2 transport cable system.

Further, in the cable system of the present embodiment, the multiplexing device 106 is configured to produce the multiplex signal in which the cable video data is assigned to a limited bandwidth of the corresponding broadcast channel and the two-way communication downstream data is assigned to the remaining bandwidth of the corresponding broadcast channel.

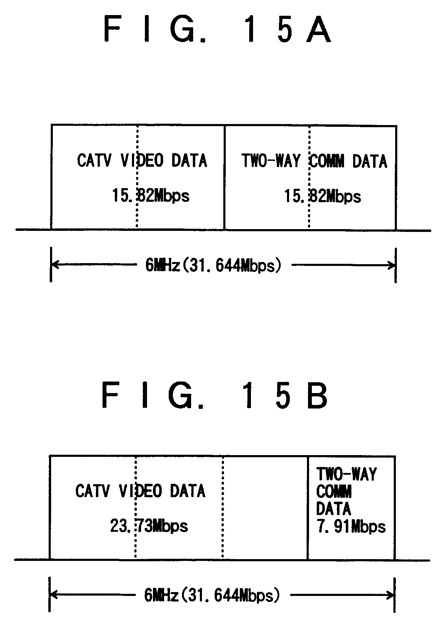

FIG. 15A and FIG. 15B show the multiplexing of the distributed video data and the two-way communication downstream data. FIG. 15A indicates the multiplex signal of the present embodiment, in which the cable video data and the two-way communication downstream data are equally assigned to the bandwidth of the corresponding broadcast channel. In this example, the bandwidth of the video data assignment is limited to half of the total bandwidth 31.644 Mbps of the 64QAM broadcast channel.

FIG. 15B indicates the multiplex signal of the present embodiment, in which the cable video data is assigned to a limited bandwidth of the corresponding broadcast channel (or three fourths of 31.644 Mbps) and the two-way communication downstream data is assigned to the remaining bandwidth of the corresponding broadcast channel (or one fourth of 31.644 Mbps). The rate of the video data bandwidth to the total bandwidth is predetermined so as to match with the relationship between the quantity of the cable video data and the quantity of the two-way communication downstream data delivered on the cable 135.

For a certain case, in the cable system of the present embodiment, the multiplexing device 106 is configured to produce the multiplex signal in which the bandwidth to which the downstream data is assigned is larger than the bandwidth to which the video data is assigned.

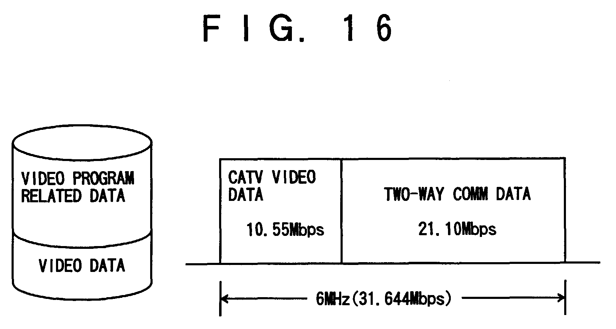

FIG. 16 shows the multiplexing of the distributed video data and the two-way communication downstream data for the above case. As indicated on the left side of FIG. 16, in this case, the quantity of the video program-related data, delivered on the cable, is larger than the quantity of the video data. As indicated on the right side of FIG. 16, in the multiplex signal of the present embodiment, the cable video data is assigned to a limited bandwidth of the corresponding broadcast channel (about 10.55 Mbps) and the two-way communication downstream data is assigned to the remaining bandwidth of the corresponding broadcast channel (about 21.10 Mbps).

Further, in the cable system of the present embodiment, when the reception of the user's request for the video program-related data is determined but the quantity of the two-way communication downstream data exceeds a quantity of the corresponding broadcast channel available, the management device 120 causes the center system to transmit a notification that the request is not accepted, to the DSTB 140 of the subscriber terminal device. The payload data in the MPEG2 transport packet, shown in FIG. 14, can include the one-way, user-oriented personal data, which is multiplexed and delivered on the cable 135. The above-described notification can be produced by using the payload of the MPEG2 transport packet, and transmitted to the DSTB 140 by the center system.

In the above-described embodiment shown in FIG. 9, the management device 120 is configured to cause the multiplexing device 106 to provide the multiplexing of the video data and the video program-related data with respect to the video data distributed to the subscriber terminal device as the downstream data, when the reception of the request is determined. However, the present invention is not limited to this embodiment. The management device 120 may be configured to cause the multiplexing device 106 to provide the multiplexing of the cable video data and any other downstream data that are different from the video data distributed to the subscriber terminal device, when the reception of the request is determined. It is possible to provide the multiplexing of the video data and any two-way communication downstream data based on the Internet protocol (IP).

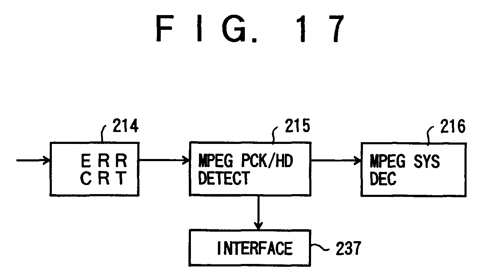

In the above-described embodiment shown in FIG. 11, the MPEG system decoder 216 is configured to detect which of video, audio and data is carried by the received MPEG2 transport packet, by checking the packet identifier (PID) in the packet header of the received MPEG2 transport packet. The decoded video components, the decoded audio components or other decoded components are temporarily stored in the RAM 217. The other decoded components stored in the RAM 217 are supplied to the PC 238 via the PC interface 217. However, the present invention is not limited to this embodiment. The subscriber terminal device or the DSTB of the present invention may be configured as shown in FIG. 17.

FIG. 17 shows a variation of the subscriber terminal device shown in FIG. 11. In the configuration of the digital set top box (DSTB) of the embodiment of FIG. 17, an MPEG packet header detecting device (PCK/HD DETECT) 215 is provided between the forward error correcting device 214 and the MPEG system decoder 216. In this embodiment, the packet header detecting device 215 is configured to detect which of video, audio and data is carried by the received MPEG2 transport packet, by checking the packet identifier (PID) in the packet header of the received MPEG2 transport packet. The other decoded components that are different from the decoded video components or the decoded audio components are supplied from the packet header detecting device 215 to the PC 238 via the PC interface 217.

Further, in the above-described embodiment, as shown in FIG. 15A and FIG. 15B, the channel allocation for the multiplexing of the distributed video data and the two-way communication downstream data is based on the 6-MHz bandwidth. However, the center system and the subscriber terminal device of the present invention are not limited to this embodiment. The center system and the subscriber terminal device of the present invention may be configured to use a channel allocation based on the 12-MHz bandwidth that is twice the 6-MHz bandwidth.

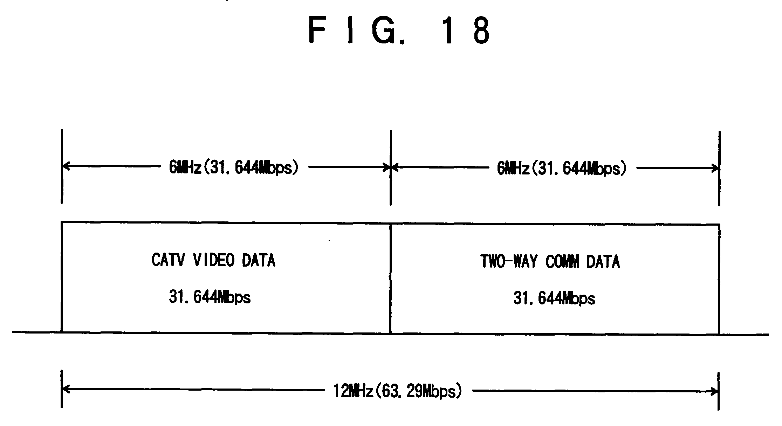

FIG. 18 shows a channel allocation for the multiplexing of the distributed video data and the two-way communication downstream data for the above-described case. As shown in FIG. 18, in the multiplex signal of the present embodiment, the cable video data is assigned to the doubled bandwidth of the corresponding broadcast channel (about 31.644 Mbps) and the two-way communication downstream data is assigned to the doubled bandwidth of the corresponding broadcast channel (about 31.644 Mbps).

Further, in the above-described embodiment, only when the reception of a user's request for the video program-related data is determined, the center system transmits the multiplex signal of the video data and the program-related data to the DSTB of the user. However, the present invention is not limited to the above-described embodiment.

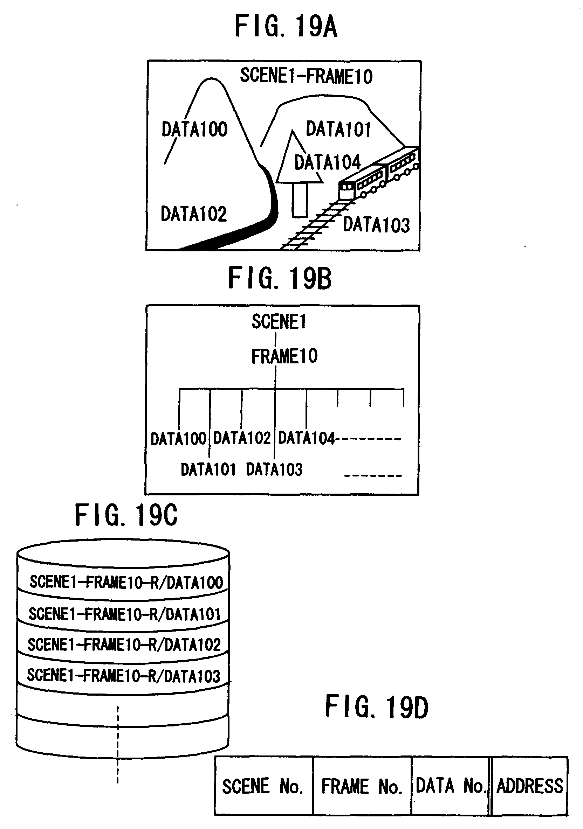

FIG. 19A, FIG. 19B, FIG. 19C and FIG. 19D show an example of transmission of the multiplex signal by the center system, for use of multimedia information transmission.

In the present embodiment, the management device 120 of the center system is configured to cause, regardless of whether the reception of the request is received or not, the multiplexing device 106 to provide the multiplexing of the cable program video data and a two-way communication downstream data that is a video program-related data with respect to the video data distributed to the subscriber terminal device, in order to transmit the multimedia information.

In the multimedia information transmission of the present embodiment, the data transmission is carried out by using the channel allocation shown in FIG. 15A. In the DSTB of the subscriber terminal device, the multimedia data signal of a corresponding one of the frequency-divided broadcast channels, sent by the center system via the cable, is received at the receiving tuner 210. The MPED system decoder 216 isolates the program-related data (such as that shown in FIG. 19B) and the video data from the received multiplex signal of the corresponding broadcast channel. The graphics circuit 222 creates character/picture images from the program-related data and the video data, so that the DSTB displays the multimedia data on the TV 238 based on the character/picture images produced by the graphics circuit 222, as shown in FIG. 19A.

In the multimedia data example shown in FIG. 19A, the "DATA100" through the "DATA104" correspond to the program-related data that are related to the video data "SCENE1 *―* FRAME10". For example, when the "DATA100" appearing on the TV screen is clicked by the user with an input device, such as a mouse, a request for receiving the program-related data "DATA100" is transmitted from the DSTB to the center system via the cable together with a notification including the scene number, the frame number, the related data number and the corresponding broadcast channel for distributing the video data to the DSTB of that user.

In the center system of the cable system of the present embodiment, the video server 108 stores the program-related data "DATA100" through "DATA104" with reference to the "SCENE1" and the "FRAME10" as shown in FIG. 19C. Further, the video server 108 stores a data link table, as shown in FIG. 19D, in which a specific address of the video server storage is correlated with the scene number, the frame number and the program-related data number. By reading the specific address from the data link table, the program-related data "DATA100" of concern stored in the video server 108 is accessed. Hence, the center system transmits the program-related data "DATA100" to the DSTB of the user via the cable in response to the user's request.

In the above-described embodiments, the cable system based on the cable transmission paths is taken as the preferred embodiments of the present invention. However, the present invention is not limited to the above-described embodiments. The basic concepts of the present invention may be extended to a wireless data transmission system in which the center system and the subscriber terminal devices are located apart from each other at a relatively short distance.

The present invention is not limited to the above-described preferred embodiments, and variations and modifications may be made without departing from the scope of the present invention.

Further, the present invention is based on Japanese priority application No.11-307568, filed on October 28, 1999, the entire contents of which are hereby incorporated by reference.

## Claims

1. A cable system which distributes a video data of a cable program from a center system to a subscriber terminal device via a cable network by using one of frequency-divided channels of broadcast programs, and carries out two-way communication between the subscriber terminal device and the center system via the cable network, comprising:
a management unit, provided in the center system, determining whether a request for two-way communication sent by the subscriber terminal device is received when the video data is distributed to the subscriber terminal device by using a corresponding one of the frequency-divided channels of broadcast programs;
a multiplexing unit, provided in the center system, multiplexing the video data and two-way communication downstream data into a multiplex signal of the corresponding broadcast channel when the reception of the request is determined by the management unit, so that the center system transmits the multiplex signal to the subscriber terminal device via the cable network by using the corresponding broadcast channel; and
a data isolation unit, provided in the subscriber terminal device, isolating the downstream data and the video data from the multiplex signal of the corresponding broadcast channel, which is received at the subscriber terminal device.

2. The cable system according to claim 1, wherein the management unit is configured to cause the multiplexing unit to provide the multiplexing of the video data and a video program-related data with respect to the video data distributed to the subscriber terminal device as the downstream data, when the reception of the request is determined.

3. The cable system according to claim 1, wherein the management unit is configured to cause the multiplexing unit to provide the multiplexing of the video data and other downstream data that are different from the video data distributed to the subscriber terminal device, when the reception of the request is determined.

4. A center system for use in a cable system in which a video data of a cable program is distributed to a subscriber terminal device via a cable network by using one of frequency-divided channels of broadcast programs, and two-way communication is carried out between the subscriber terminal device and the center system via the cable network, comprising:
a management unit determining whether a request for two-way communication sent by the subscriber terminal device is received when the video data is distributed to the subscriber terminal device by using a corresponding one of the frequency-divided channels of broadcast programs; and
a multiplexing unit multiplexing the video data and two-way communication downstream data into a multiplex signal of the corresponding broadcast channel when the reception of the request is determined by the management unit, so that the center system transmits the multiplex signal to the subscriber terminal device via the cable network by using the corresponding broadcast channel.

5. The center system according to claim 4, wherein, when a request for two-way communication sent by the subscriber terminal device is received but the video data is not distributed to the subscriber terminal device, the management unit causes the center system to transmit the two-way communication downstream data to the subscriber terminal device by using a two-way communication channel.

6. The center system according to claim 4, wherein the multiplexing unit is configured to produce the multiplex signal in which the video data is assigned to a limited bandwidth of the corresponding broadcast channel and the two-way communication downstream data is assigned to the remaining bandwidth of the corresponding broadcast channel.

7. The center system according to claim 6, wherein the multiplexing unit is configured to produce the multiplex signal in which the bandwidth to which the downstream data is assigned is larger than the bandwidth to which the video data is assigned.

8. The center system according to claim 6, wherein, when the reception of the request is determined but a quantity of the two-way communication downstream data exceeds a quantity of the corresponding broadcast channel available, the management unit causes the center system to transmit a notification that the request is not accepted, to the subscriber terminal device.

9. A subscriber terminal device for use in a cable system in which a video data of a cable program is distributed from a center system to the subscriber terminal device via a cable network by using one of frequency-divided channels of broadcast programs, and two-way communication is carried out between the subscriber terminal device and the center system via the cable network, comprising:
a reception unit receiving a signal of a corresponding one of the frequency-divided channels of broadcast programs sent by the center system via the cable network; and
a data isolation unit isolating two-way communication downstream data and the distributed video data from a multiplex signal of the corresponding broadcast channel, which is received by the reception unit.

10. The subscriber terminal device according to claim 9, further comprising a notification unit transmitting, when sending a request for two-way communication to the center system, a notification of the corresponding broadcast channel acceptable to the reception unit, to the center system

11. The subscriber terminal device according to claim 9, further comprising a data display unit simultaneously displaying the video data and the downstream data, produced by the data isolation unit, on a television unit.

12. The cable system according to claim 2, wherein the management unit is configured to cause, regardless of whether the reception of the request is received or not, the multiplexing unit to provide the multiplexing of the video data and the two-way communication downstream data that is a video program-related data with respect to the video data distributed to the subscriber terminal device.
